(19) Europäisches Patentamt
European Patent Office
Office européen des brevets

(11) **EP 4 556 988 A2**

(12) **EUROPEAN PATENT APPLICATION**

(43) Date of publication:
**21.05.2025 Bulletin 2025/21**

(21) Application number: **25168951.9**

(22) Date of filing: **19.04.2018**

(51) International Patent Classification (IPC):
***G02B 27/14*** (2006.01)

(52) Cooperative Patent Classification (CPC):
**F41G 1/30; G02B 17/04; G02B 23/105; G02B 23/24; G02B 27/141; G02B 27/144;** G02B 27/0025

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.01.2018 US 201862619209 P**

(62) Document number(s) of the earlier application(s) in accordance with Art. 76 EPC:
**18901063.0 / 3 698 204**

(71) Applicant: **Raytheon Canada Limited Ottawa, ON K1R 7X7 (CA)**

(72) Inventor: **SZAPIEL, Stanislaw Ottawa, K1R 7X7 (CA)**

(74) Representative: **Dentons UK and Middle East LLP One Fleet Place London EC4M 7WS (GB)**

Remarks:
This application was filed on 07-04-2025 as a divisional application to the application mentioned under INID code 62.

(54) **FLAT OPTICAL COMBINER WITH EMBEDDED OFF-AXIS ASPHERIC MIRROR FOR COMPACT REFLEX SIGHTS**

(57) Optical combiners and methods of manufacturing and alignment thereof are provided. An optical combiner includes a first optical element with a convex surface and a second optical element with a concave surface. At least one of the convex or concave surfaces has an aspherical curvature, e.g., is an aspherical surface. A reflective coating is applied to the aspherical surface, and an adhesive couples the convex surface to the concave surface to provide a combined optical element. The combined optical element, or optical doublet, may be aligned with a light source, to be reflected by the reflective coating, to provide an aiming reference for a user.

EP 4 556 988 A2

**Description**

CROSS REFERENCE TO RELATED APPLICATIONS

This application claims the benefit of priority under PCT Article 8 to co-pending U.S. Provisional Patent Application No. 62/619,209 filed on January 19, 2018, and to co-pending U.S. Provisional Patent Application No. 62/659,778 filed on April 19, 2018, each of which is titled FLAT OPTICAL COMBINER WITH EMBEDDED OFF-AXIS ASPHERIC MIRROR FOR COMPACT REFLEX SIGHTS, and each of which is incorporated herein by reference in its entirety for all purposes.

BACKGROUND

Optical combiners combine two optical signals into one. At least one application of an optical combiner includes reflex gun sights. A reflex gun sight allows a user to see an intended target through the combiner while simultaneously seeing a reflex image (an at least partial reflection) of a light source. The reflex image of the light source is intended to align with a nominal trajectory of a projectile. Accordingly, the optical combiner combines the view of the target (e.g., in the far field) with a collimated reflection of the light source. When the light source reflection, e.g., a red dot, aligns with the intended target as seen by the user through the combiner, the nominal trajectory of the projectile should hit the target.

SUMMARY

Aspects and examples described herein provide improved optical combiners, and methods for their fabrication, alignment, and use. Optical combiners described herein provide a collimated beam from a light source that generates an aiming reference (e.g., a "red dot"), while simultaneously allowing undistorted observation of a target. The "red dot" is viewed by a user, as a portion of the collimated light sampled by the pupil of the user's eye and focused on the user's retina. In various examples, optical combiners described herein may have a flat (planar) front, aligned with (e.g., perpendicular to) an axis of rotational symmetry of a curved reflective surface. Such axis also defines an ideal line of sight of a user (e.g., parallel to the axis) looking through the combiner. Accordingly, optical combiners as described herein minimize aberrations (including distortion) of the target image that might otherwise be caused by an angle or tilting of a curved optical combiner. In various examples, optical combiners described herein may include an aspherical reflective surface to provide improved collimation, and therefore accuracy, of the "red dot" aiming reference. Further in various examples, optical combiners described herein may include reflective surfaces whose axis of rotational symmetry is off-set from the user's line of sight and/or from the structure of the optical combiner itself, including examples where the vertex of the reflective curvature is not part of the optical combiner, e.g., the vertex lies outside the structural bounds of the optical combiner.

According to one aspect, an optical combiner is provided that includes a first optical element having a convex surface, a second optical element having a concave surface, at least one of the convex surface or the concave surface having an aspherical curvature, a reflective coating applied to the at least one of the convex surface or the concave surface having an aspherical curvature, and an adhesive arranged to couple the convex surface to the concave surface to provide a combined optical element including the first optical element and the second optical element as an optical doublet.

In some embodiments, the aspherical curvature has an axis of rotational symmetry (also sometimes referred as an axis of curvature herein) substantially normal to a planar surface of at least one of the first optical element and the second optical element.

In certain embodiments, the aspherical curvature has a vertex that is not located on the convex surface and not located on the concave surface.

In some embodiments, the first and second optical elements include a planar surface nominally orthogonal to an axis of curvature (e.g., an axis of rotational symmetry) of the aspherical curvature.

In various embodiments the aspherical curvature is defined at least in part by a conic constant of zero.

In various embodiments the aspherical curvature is defined at least in part by a non-zero higher order coefficient.

In certain embodiments, the aspherical curvature is defined at least in part by a non-zero fourth order coefficient, such that an aspheric departure varies with the fourth power of a linear distance from a vertex. In certain embodiments, the aspherical curvature is defined at least in part by a non-zero sixth order coefficient, such that an aspheric departure varies with the sixth power of the linear distance from the vertex.

Some embodiments include a light source nominally positioned at a focal point of the aspherical curvature.

In various embodiments the reflective coating is a dichroic reflective coating.

In certain embodiments, the convex surface has the aspherical curvature and the concave surface has a spherical curvature.

In some embodiments, the reflective coating is configured to reflect a waveband within a visible spectrum. In certain embodiments, each of the first and second optical elements are transmissive of a range of wavelengths in the visible spectrum, the range of wavelengths broader than and including the waveband. Certain embodiments also include a light source nominally positioned at a focal point of the aspherical curvature, the light source configured to generate light at a wavelength within the waveband.

According to another aspect, a reflex sighting device having a line of sight for a user to view a target is provided. The sighting device includes an optical element having substantially flat front and rear surfaces, the front and rear surfaces positioned substantially orthogonal to the line of sight, an aspheric reflective surface embedded in the optical element and positioned to reflect and collimate light originating at a focal point, such that the collimated light emerges from the optical element substantially orthogonal to the front and rear surfaces and substantially parallel to the line of sight, and a light source nominally positioned at the focal point and configured to generate light directed at the reflective surface.

In certain embodiments, the aspheric reflective surface includes a dichroic mirror coating.

In some embodiments, the aspheric reflective surface follows a curvature defined at least in part by a conic constant of zero.

In some embodiments, the aspheric reflective surface follows a curvature defined at least in part by a non-zero higher order coefficient.

In some embodiments, the aspheric reflective surface follows a curvature defined at least in part by a non-zero fourth order coefficient, such that an aspheric departure varies with the fourth power of a linear distance from a vertex. In certain embodiments, the aspheric reflective surface follows a curvature also defined at least in part by a non-zero sixth order coefficient, such that an aspheric departure varies with the sixth power of the linear distance from the vertex.

In various embodiments, the reflective surface is a dichroic reflective surface.

According to certain embodiments, the reflective surface is configured to reflect a waveband within a visible spectrum. In some embodiments, the light source is configured to generate the light including a wavelength within the waveband.

According to yet another aspect, a method of calibrating a reflex sight having an optical combiner with a reflective curvature is provided. The method includes directing collimated light at a planar surface of the optical combiner, aligning the collimated light to be substantially normal to the planar surface, detecting a portion of the collimated light reflected by the reflective curvature, translating the collimated light through a range of positions while substantially maintaining alignment of the collimated light substantially normal to the planar surface, detecting a location where the portion of the collimated light reflected by the reflective curvature remains substantially fixed while translating the collimated light, and placing a light source at the location.

In some embodiments, aligning the collimated light to be substantially normal to the planar surface includes detecting a portion of the collimated light that is reflected by the planar surface.

Certain embodiments include orienting the light source such that the light source directs light toward the reflective curvature when placed in operation.

Some embodiments include mounting the reflex sight. Certain embodiments include mounting the reflex sight to a firearm.

Various embodiments include mounting the reflex sight to one of a weapon, a camera, a telescope, a lens, a gimbal, a vehicle, a communication device, a transceiver, and an antenna.

Still other aspects, examples, and advantages are discussed in detail below. Embodiments disclosed herein may be combined with other embodiments in any manner consistent with at least one of the principles disclosed herein, and references to "an embodiment," "some embodiments," "an alternate embodiment," "various embodiments," "one embodiment" or the like are not necessarily mutually exclusive and are intended to indicate that a particular feature, structure, or characteristic described may be included in at least one embodiment. The appearances of such terms herein are not necessarily all referring to the same embodiment. Various aspects and embodiments described herein may include means for performing any of the described methods or functions.

BRIEF DESCRIPTION OF THE DRAWINGS

Various aspects of at least one embodiment are discussed below with reference to the accompanying figures, which are not intended to be drawn to scale. The figures are included to provide illustration and a further understanding of the various aspects and embodiments, and are incorporated in and constitute a part of this specification, but are not intended as a definition of the limits of the disclosure. In the figures, each identical or nearly identical component that is illustrated in various figures is represented by a like numeral. For purposes of clarity, not every component may be labeled in every figure. In the figures:

FIGS. 1A-1B are side view schematic diagrams of a reference optical combiner;
FIG. 2 is a side view schematic diagram of an optical combiner in accord with aspects and embodiments described herein, in application as a component of a reflex sight;
FIG. 3 is a schematic diagram of a front and side view of an optical combiner in accord with aspects and embodiments described herein;

FIG. 4 is a schematic diagram of an example of construction detail of an optical combiner in accord with aspects and embodiments described herein; and

FIG. 5 is a schematic diagram for a method of calibrating a reflex sight having an optical combiner in accord with aspects and embodiments described herein.

DETAILED DESCRIPTION

Various aspects and embodiments are directed to improved systems and methods for optical combiners that may be advantageously applied in reflex gun sights and other visual aiming or targeting applications.

It is to be appreciated that embodiments of the methods and apparatuses discussed herein are not limited in application to the details of construction and the arrangement of components set forth in the following description or illustrated in the accompanying drawings. The methods and apparatuses are capable of implementation in other embodiments and of being practiced or of being carried out in various ways. Examples of specific implementations are provided herein for illustrative purposes only and are not intended to be limiting. Also, the phraseology and terminology used herein is for the purpose of description and should not be regarded as limiting. The use herein of "including," "comprising," "having," "containing," "involving," and variations thereof is meant to encompass the items listed thereafter and equivalents thereof as well as additional items. References to "or" may be construed as inclusive so that any terms described using "or" may indicate any of a single, more than one, and all of the described terms. Any references to front and back, left and right, top and bottom, upper and lower, end, side, vertical and horizontal, and the like, are intended for convenience of description, not to limit the present systems and methods or their components to any one positional or spatial orientation.

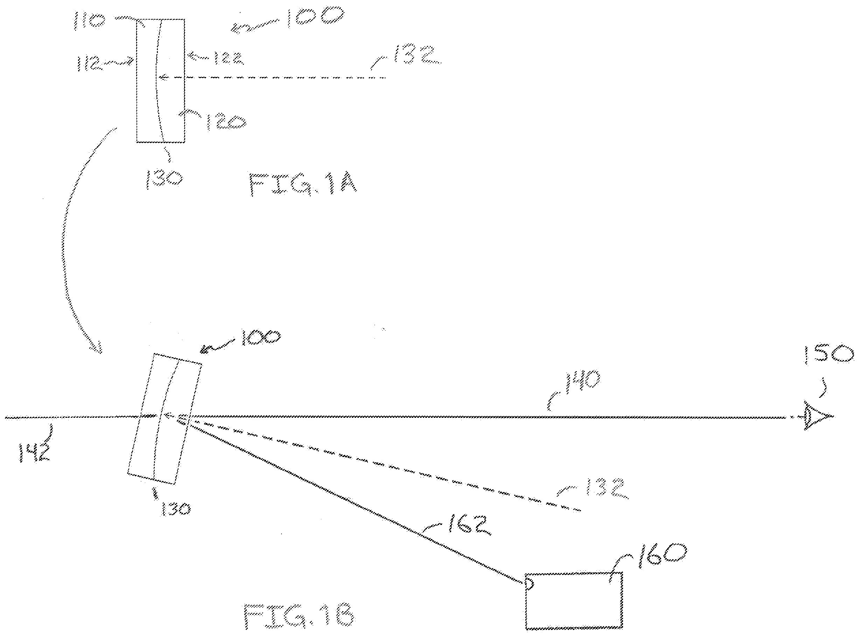

Conventional reflex sights include optical combiners with curved surfaces which customarily cause distortion of imagery. Referring to FIG. 1A, there is illustrated an example of a conventional optical combiner 100 of rare form, having a front planar surface 112 of a front optical element 110 and a rear planar surface 122 of a rear optical element 120. The front optical element 110 and the rear optical element 120 are matched or joined together at a curved surface 130. The curved surface 130 is embedded in the conventional optical combiner 100 and is at least partially reflective and at least partially transmissive, as discussed in more detail below. An axis of symmetry 132 of the curved surface 130 is also shown. The curved surface 130 conventionally conforms to a spherical shape or a parabolic shape, and therefore may include a focal point on the axis of symmetry.

FIG. 1B illustrates the conventional optical combiner 100 used as a component of a reflex sight. The conventional optical combiner 100 is tilted at an angle relative to a line of sight 140, and light 142 entering the optical combiner 100 from a target (not shown) is allowed to pass through the optical combiner 100 and follow the line of sight 140 and be viewed by a user 150. A "red dot" image is superimposed on the scene viewed by the user 150 by action of the curved surface 130 reflecting light from a light source 160. The term "red dot" is merely a notional term, and the light source 160 may be configured to provide any of various colors of light (e.g., green) and may include any of various shapes (e.g., cross-hair). The light source 160 produces light 162 that enters the optical combiner 100 through the rear optical element 120 and is reflected (at least partially) by the curved surface 130. The curved surface 130 approximately collimates the light 162 so that a small image of the light 162 (e.g., a red dot) may appear substantially fixed on the scene, as viewed by the user 150, for a range of viewing positions of the user's eye. The spherical or parabolic shape of the curved surface 130 provides only limited ability to provide collimated light, thus limiting the range of viewing angles and/or reducing accuracy of position of the "red dot."

In conventional reflex sight optical design, including a flat refractive surface with a reflective curvature is counterintuitive and considered "against the rules." Such a flat surface interacting with a divergent beam of light conventionally generates aberrations that diminish the quality of collimation and produce parallax errors. Accordingly, an overwhelming majority of conventional designs use a concave refractive surface to reduce an amount of aberration, as compared to a flat refractive surface.

However, aspects and embodiments described herein provide an off-axis aspherical reflective surface to solve the above problem of a flat refractive surface, resulting in very fast collimator optics. In some embodiments, a parent mirror clear aperture diameter is 34 mm, and a focal length of the collimator is 30 mm, such that a corresponding f-number is (30/34) - which is less than one! Additionally, combiners having flat refractive surfaces, in accord with aspects and embodiments described herein, are much easier to handle during large scale production than those having curved surfaces, are easier to seal, and are more readily made to withstand underwater pressure at varying and significant depths.

Aspects and embodiments disclosed herein provide optical combiners with improved collimation of the reflected light, and planar surfaces substantially normal to the line of sight, each of which provide for higher accuracy across a wider range of viewing angles, without optical distortion. Optical combiners and methods in accord with aspects and embodiments disclosed herein also accommodate relative ease of manufacture and calibration, such as final placement of a light source. As used herein with reference to various aspects and embodiments, the term "aspherical curvature" generally refers to a curved aspherical surface. As used herein with reference to such aspherical surfaces, the term "axis of curvature" refers generally to an axis of symmetry of the aspherical surface, as opposed to an axis at an individual local point on the surface. Accordingly, the term "axis of curvature" as used herein may refer to an axis defined by, or at, a vertex point of a curved aspherical surface.

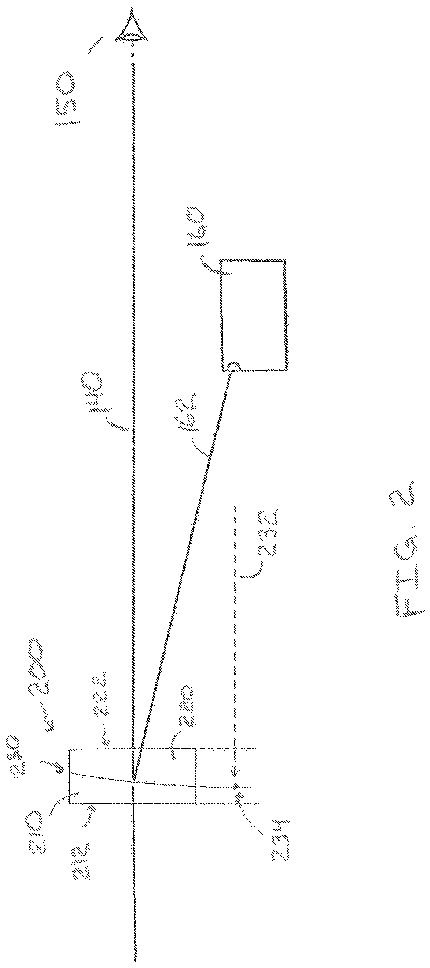

FIG. 2 illustrates a reflex sight arrangement including an example of an optical combiner 200 in accord with aspects and embodiments described herein. The optical combiner 200 includes a front optical element 210 joined with a rear optical element 220 and having an internally embedded aspheric mirror 230. The front optical element 210 has a planar surface 212 that may be positioned substantially normal to the line of sight 140 of the user 150, and the rear optical element 220 has a planar surface 222 that may also be positioned substantially normal to the line of sight 140. The aspheric mirror 230 has an axis of curvature 232 that is substantially parallel to the line of sight 140. A vertex 234, which is the point of intersection between the curved surface of the aspheric mirror 230 and the axis of curvature 232, is an imaginary point that lies outside the optical combiner 200.

The aspheric mirror 230 may be formed as a rotationally symmetric aspherical surface, e.g., formed of an interior surface on either of the front optical element 210 or the rear optical element 220, and coated with a dichroic mirror coating. The aspheric mirror 230 may have a higher-order aspherical curvature, as discussed in more detail below, in various embodiments. The dichroic mirror coating reflects light of a narrow band of wavelengths, and is matched to be reflective of the light source 160, e.g., red, green, or other light. Various parameters of an aspherical curvature may be selected for the aspheric mirror 230, including higher-order aspheric coefficients in some embodiments, to provide accurate collimation of light 162 (from the light source 160) into the line of sight 140. Accuracy of the collimation of the light 162 is further enhanced by aspects and embodiments disclosed herein by virtue of the vertex 234 being off the line of sight 140, such that the axis of curvature 232 may be substantially parallel with the line of sight 140, and placement of the light source 160 may be substantially in line with the vertex 234 and on the axis of curvature 232.

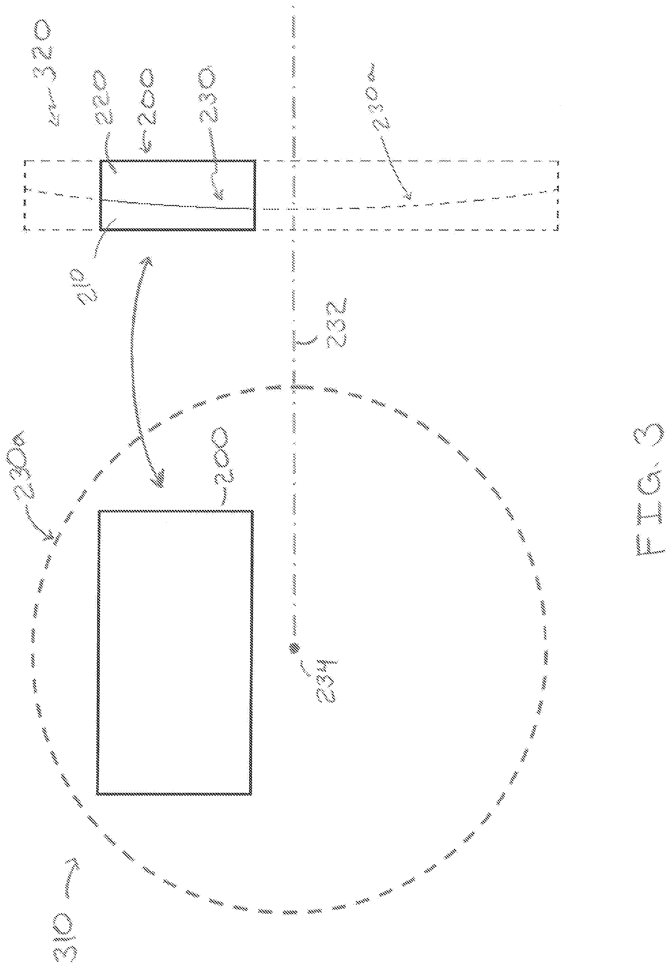

FIG. 3 shows a schematic front view 310 and a schematic side view 320 illustrating at least one form of the optical combiner 200. The aspheric mirror 230 follows a curvature 230a as shown in some detail in FIG. 3. The front and rear optical elements 210, 220 may be formed of an optical material having various desirable properties, such as optical clarity, hardness, refractive index, etc. The curvature 230a, a portion of which forms part of the aspheric mirror 230, may be formed as an aspherical convex surface of the rear optical element 220 in various embodiments, and the front optical element 210 may have a spherical concave surface selected to be a close match to the aspherical convex surface. The front and rear optical elements 210, 220 may be joined together at their curved surfaces with an optical cement that matches the refractive index(es) of the front and rear optical elements 210, 220. The spherical concave surface may be a best fitting sphere to the aspherical convex surface.

In other embodiments, the curvature 230a may be formed as an aspherical concave surface on the front optical element 210, or may be formed as adjoining aspherical surfaces on each of the front and rear optical elements 210, 220.

While the optical combiner 200 is shown in the front view 310 of FIG. 3 as having a rectangular profile when viewed from the front or rear, various embodiments may have other shapes or forms. For example, when viewed from the front or rear, various optical combiners in accord with aspects and embodiments described herein may be square, circular, oblong, or other shapes having linear or rounded edges, and may or may not be symmetrical.

The curvature 230a is an aspherical curvature (a curved aspherical surface), and at least a portion of the curvature 230a forms a surface that becomes the aspheric mirror 230 by application of a reflective coating, e.g., a dichroic mirror coating. In various embodiments, the curvature 230a may be defined by equation (1), which gives the sag, z, defining the departure of the curvature 230a, from a planar reference, at a radial distance, r, from the vertex along the plane. The curvature 230a is rotationally symmetric about the axis of curvature 232, and centered on the vertex 234.

$$z = \frac{cr^2}{1+\sqrt{1-(1+k)c^2r^2}} + Ar^4 + Br^6 + Cr^8 + Dr^{10} + Er^{12} + Fr^{14} + \cdots \qquad (1)$$

The higher order coefficients, A, B, C, D, E, F, ... may be referred to as aspheric deformation coefficients. The curvature, c, is the inverse of the vertex radius of curvature. When the conic constant, k, is zero, and all the higher order coefficients, A, B, C, D, ... etc. are also zero, equation (1) defines a spherical surface of radius R = 1/c. Accordingly, in various embodiments, the curvature 230a is defined by equation (1) having a non-zero value for at least one of the constants, k, A, B, C, ..., etc. to have an aspherical shape. In various embodiments, the curvature 230a is aspherical having a conic constant of zero, k = 0, and having a non-zero fourth order coefficient, A ≠ 0. In further embodiments, the curvature 230a is aspherical having a conic constant of zero, k = 0, and having a non-zero value for each of the fourth and sixth order coefficients, A ≠ 0 and B ≠ 0.

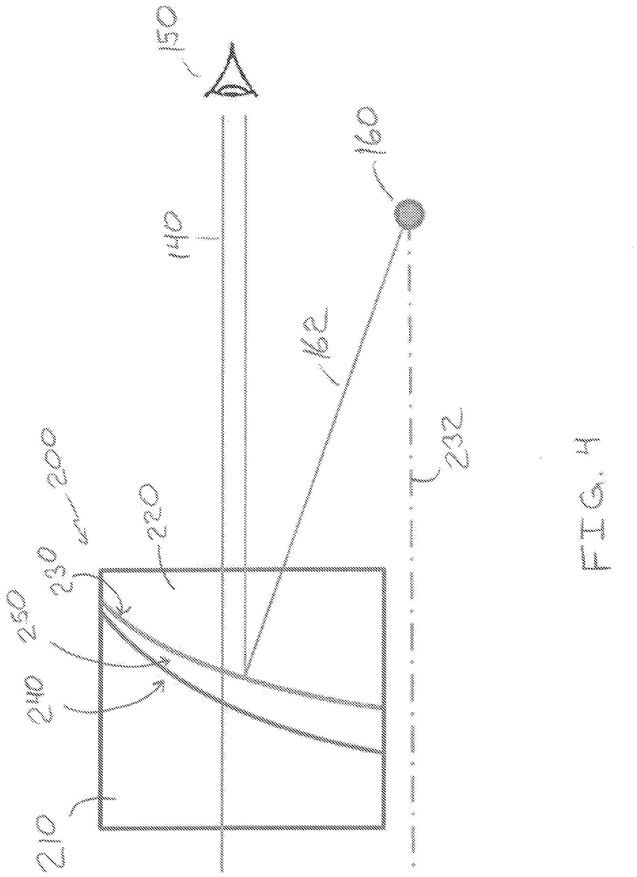

FIG. 4 illustrates one example of an assembly of the optical combiner 200. The aspheric mirror 230 may be formed on the rear optical element 220 as an aspheric curvature (e.g., a portion of the curvature 230a of FIG. 3) with a dichroic reflective surface coating (e.g., to reflect the light 162). The front optical element 210 may have a spherical surface 240 selected to match well to the shape of the aspheric mirror 230. For example, a spherical surface 240 that minimizes the volume of a gap 250 between it and the aspheric mirror 230 may be considered a best fitting sphere. The gap 250, which is exaggerated in the figure for clarity, may be filled with an index-matching optical cement, thereby joining the front and rear optical elements 210, 220 to each other and filling the gap 250 so that the optical combiner 200 exists as a solid unit. In various embodiments, the spherical surface 240 may be more easily manufactured than the curvature of the aspheric mirror 230, and the assembly illustrated in FIG. 4 therefore allows the optical combiner 200 to be manufactured requiring only a single aspherically curved surface to be created.

In at least one embodiment, the optical combiner 200 may have a prescription as annotated in Table 1, which is provided merely for illustrative purposes of at least one example of an optical combiner in accord with aspects and embodiments described herein. Various dimensions and values noted in Table 1 may be approximate, and various other embodiments may have dimensions and values vastly different from those in Table 1.

Table 1

| | |
|---|---|
| Clear Aperture Diameter (parent aspheric mirror) | 34 mm |
| Thickness (of the convex element) | 8 mm |
| Aspheric Mirror 230 Vertex Radius | R = 1/c = - 91.0 mm |
| Aspheric Mirror 230 Conic Constant | k = 0 |
| Aspheric Mirror 230 Fourth Order Coeff | A = + 8.7721 x $10^{-7}$ |
| Aspheric Mirror 230 Sixth Order Coeff | B = - 6.6472 x $10^{-11}$ |
| Spherical Surface 240 Radius (e.g., best fit) | $R_o$ = - 95.228 mm |
| Distance from rear planar surface to light source 160 | d = 24.706 mm |
| Optical Glass | Schott N-BK7 |
| Effective Focal Length of Collimator | 30 mm |

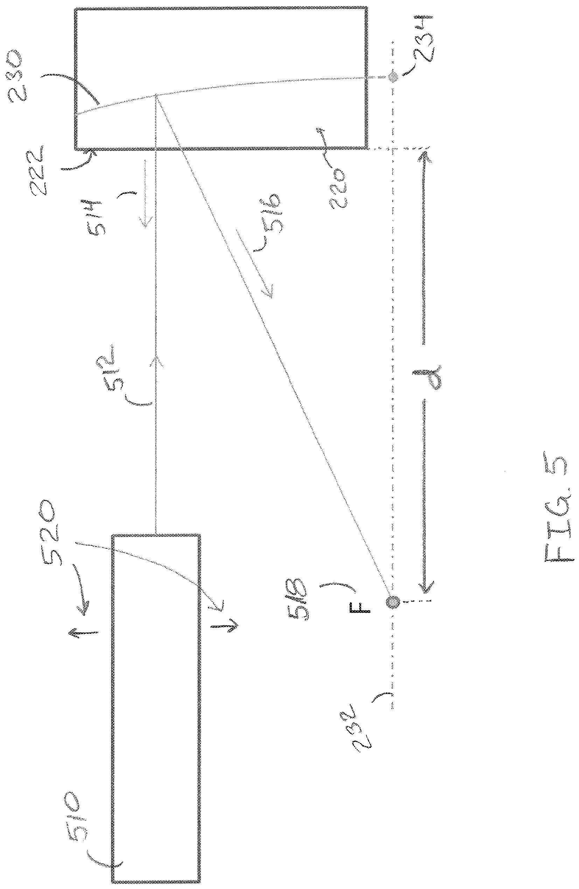

FIG. 5 illustrates one example of a method of aligning a light source 160 to the optical combiner 200. A collimated light source 510 (which may emit a white light, for example) may be positioned to emit light 512 at the planar surface 222 of the rear optical element 220. The collimated light source 510 (an autocollimator in some examples) may be precisely positioned so that the light 512 travels substantially parallel to what will be the line of sight, because a small amount of reflected light 514 may be reflected by the planar surface 222, which as discussed above is substantially normal to the line of sight. Accordingly, when the reflected light 514 aligns with an optical axis of the collimated light source 510, it may be confirmed that the light 512 is travelling normal to the planar surface 222, and therefore parallel with the intended line of sight. When the collimated light source 510 is positioned in the above manner, the aspheric mirror 230 reflects a reflex light 516, which is a narrow waveband portion of the light 512 (e.g., red light, depending upon the dichroic coating) that passes through a focal point 518. Translational movement 520 of the collimated light source 510, without alteration to its orientation (e.g., maintaining the path of the light 512 to be parallel to the line of sight), produces a range of reflex light 516 that all pass through the focal point 518, thereby allowing easy identification of the focal point 518. Placement of a light source, e.g., the light source 160 of FIG. 2, at the identified focal point 518 yields an aligned (e.g., calibrated) reflex sight.

Optical combiners in accord with aspects and embodiments described herein may provide significant advantages. For example, the aspheric mirror may provide better collimation of light, allowing a larger area of the optical combiner to provide precise and accurate positioning of the "red dot" across a range of viewing positions. Accordingly, such may allow a larger eyebox for the user to look through, and allow the user's eye position to be more widely off-center while maintaining accuracy of aiming. Positioning of the aspheric mirror such that the vertex of the curvature of the aspheric mirror is out of the line of sight, and such that the axis of curvature of the aspheric mirror is substantially parallel to the line of sight, allows placement of the light source at the focal point, which also improves the collimation accuracy, again providing more precise and accurate aiming with the "red dot." Planar front and rear surfaces of the optical combiner provide no distortion and, accordingly, improved accuracy. The planar rear surface may be advantageously used for alignment and calibration, to confirm alignment of a collimated light source that allows identification of a focal point. Various embodiments may be more easily manufactured, requiring only one aspherical surface to be fabricated, by joining the mirror-coated aspherical surface to a well-fitting spherical surface, with optical cement, to form a single unit thereby having an interior aspherical mirror.

Having thus described several aspects of at least one embodiment, it is to be appreciated various alterations, modifications, and improvements will readily occur to those skilled in the art. Such alterations, modifications, and improvements are intended to be part of this disclosure and are intended to be within the scope of the disclosure.

Accordingly, the foregoing description and drawings are by way of example only.

The invention can be defined by the following clauses.

1. An optical combiner comprising:

a first optical element having a convex surface;
a second optical element having a concave surface, at least one of the convex surface or the concave surface having an aspherical curvature;
a reflective coating applied to the at least one of the convex surface or the concave surface having an aspherical curvature; and
an adhesive arranged to couple the convex surface to the concave surface to provide a combined optical element including the first optical element and the second optical element as an optical doublet.

2. The optical combiner of clause 1 wherein the aspherical curvature has an axis of curvature substantially normal to a planar surface of at least one of the first optical element and the second optical element.

3. The optical combiner of clause 1 wherein the aspherical curvature has a vertex that is not located on the convex surface and not located on the concave surface.

4. The optical combiner of clause 1 wherein each of the first and second optical elements include a planar surface nominally orthogonal to an axis of curvature of the aspherical curvature.

5. The optical combiner of clause 1 wherein the aspherical curvature is defined at least in part by a conic constant of zero.

6. The optical combiner of clause 1 wherein the aspherical curvature is defined at least in part by a non-zero higher order coefficient.

7. The optical combiner of clause 1 wherein the aspherical curvature is defined at least in part by a non-zero fourth order coefficient, such that an aspheric departure varies with the fourth power of a linear distance from a vertex.

8. The optical combiner of clause 7 wherein the aspherical curvature is defined at least in part by a non-zero sixth order coefficient, such that an aspheric departure varies with the sixth power of the linear distance from the vertex.

9. The optical combiner of clause 1 further comprising a light source nominally positioned at a focal point of the aspherical curvature.

10. The optical combiner of clause 1 wherein the reflective coating is a dichroic reflective coating.

11. The optical combiner of clause 1 wherein the convex surface has the aspherical curvature and the concave surface has a spherical curvature.

12. The optical combiner of clause 11 wherein the reflective coating is configured to reflect a waveband within a visible spectrum.

13. The optical combiner of clause 12 wherein each of the first and second optical elements are transmissive of a range of wavelengths in the visible spectrum, the range of wavelengths broader than and including the waveband.

14. The optical combiner of clause 12 further comprising a light source nominally positioned at a focal point of the aspherical curvature, the light source configured to generate light at a wavelength within the waveband.

15. A reflex sighting device having a line of sight for a user to view a target, the sighting device comprising:

an optical element having substantially flat front and rear surfaces, the front and rear surfaces positioned substantially orthogonal to the line of sight;
an aspheric reflective surface embedded in the optical element and positioned to reflect and collimate light originating at a focal point, such that the collimated light emerges from the optical element substantially orthogonal to the front and rear surfaces and substantially parallel to the line of sight; and

a light source nominally positioned at the focal point and configured to generate light directed at the reflective surface.

16. The sighting device of clause 15 wherein the aspheric reflective surface includes a dichroic mirror coating.

17. The sighting device of clause 15 wherein the aspheric reflective surface follows a curvature defined at least in part by a conic constant of zero.

18. The sighting device of clause 15 wherein the aspheric reflective surface follows a curvature defined at least in part by a non-zero higher order coefficient.

19. The sighting device of clause 15 wherein the aspheric reflective surface follows a curvature defined at least in part by a non-zero fourth order coefficient, such that an aspheric departure varies with the fourth power of a linear distance from a vertex.

20. The sighting device of clause 19 wherein the aspheric reflective surface follows a curvature defined at least in part by a non-zero sixth order coefficient, such that an aspheric departure varies with the sixth power of the linear distance from the vertex.

21. The sighting device of clause 15 wherein the reflective surface is a dichroic reflective surface.

22. The sighting device of clause 15 wherein the reflective surface is configured to reflect a waveband within a visible spectrum.

23. The sighting device of clause 22 wherein the light source is configured to generate the light including a wavelength within the waveband.

24. A method of calibrating a reflex sight having an optical combiner with a reflective curvature, the method comprising:

directing collimated light at a planar surface of the optical combiner;
aligning the collimated light to be substantially normal to the planar surface;
detecting a portion of the collimated light reflected by the reflective curvature;
translating the collimated light through a range of positions while substantially maintaining alignment of the collimated light substantially normal to the planar surface;
detecting a location where the portion of the collimated light reflected by the reflective curvature remains substantially fixed while translating the collimated light; and
placing a light source at the location.

25. The method of clause 24 wherein aligning the collimated light to be substantially normal to the planar surface includes detecting a portion of the collimated light that is reflected by the planar surface.

26. The method of clause 24 further comprising orienting the light source such that the light source directs light toward the reflective curvature when placed in operation.

27. The method of clause 24 further comprising mounting the reflex sight.

28. The method of clause 24 further comprising mounting the reflex sight to a firearm.

29. The method of clause 24 further comprising mounting the reflex sight to one of a weapon, a camera, a telescope, a lens, a gimbal, a vehicle, a communication device, a transceiver, and an antenna.

**Claims**

1.  An optical combiner comprising:

a first optical element having a convex surface;

a second optical element having a concave surface, at least one of the convex surface or the concave surface having an aspherical curvature;

a reflective coating applied to the at least one of the convex surface or the concave surface having an aspherical curvature, wherein the aspherical curvature is defined at least in part by a conic constant of zero; and

an adhesive arranged to couple the convex surface to the concave surface to provide a combined optical element including the first optical element and the second optical element as an optical doublet.

2. The optical combiner of claim 1, wherein the aspherical curvature is defined at least in part by a non-zero higher order coefficient.

3. The optical combiner of claim 1, wherein the aspherical curvature is defined at least in part by a non-zero fourth order coefficient, such that an aspheric departure varies with the fourth power of a linear distance from a vertex.

4. The optical combiner of claim 3, wherein the aspherical curvature is defined at least in part by a non-zero sixth order coefficient, such that an aspheric departure varies with the sixth power of the linear distance from the vertex.

5. The optical combiner according to any one of claims 1 - 4, wherein the aspherical curvature is defined by:

$$z = \frac{cr^2}{1+\sqrt{1-(1+k)c^2r^2}} + Ar^4 + Br^6 + Cr^8 + Dr^{10} + Er^{12} + Fr^{14} + \cdots,$$

wherein z defines the departure of the aspherical curvature from a planar reference at a radial distance r from the vertex along the plane, wherein A, B, C, D, E, and F are aspheric deformation coefficients, wherein the curvature c is the inverse of the vertex radius of curvature, and wherein k is a conic constant; and
wherein k = 0, A ≠ 0, and B ≠ 0.

6. A reflex sighting device having a line of sight for a user to view a target, the sighting device comprising:

an optical element having substantially flat front and rear surfaces, the front and rear surfaces positioned substantially orthogonal to the line of sight;
an aspheric reflective surface embedded in the optical element and positioned to reflect and collimate light originating at a focal point, such that the collimated light emerges from the optical element substantially orthogonal to the front and rear surfaces and substantially parallel to the line of sight, wherein the aspheric reflective surface follows a curvature defined at least in part by a conic constant of zero; and

a light source nominally positioned at the focal point and configured to generate light directed at the reflective surface.

7. The sighting device of claim 6 wherein the aspheric reflective surface follows a curvature defined at least in part by a non-zero higher order coefficient.

8. The sighting device of claim 6 wherein the aspheric reflective surface follows a curvature defined at least in part by a non-zero fourth order coefficient, such that an aspheric departure varies with the fourth power of a linear distance from a vertex.

9. The sighting device of claim 8 wherein the aspheric reflective surface follows a curvature defined at least in part by a non-zero sixth order coefficient, such that an aspheric departure varies with the sixth power of the linear distance from the vertex.

10. The sighting device according to any one of claims 6 - 9, wherein the aspherical curvature is defined by:

$$z = \frac{cr^2}{1+\sqrt{1-(1+k)c^2r^2}} + Ar^4 + Br^6 + Cr^8 + Dr^{10} + Er^{12} + Fr^{14} + \cdots,$$

wherein z defines the departure of the aspherical curvature from a planar reference at a radial distance r from the vertex along the plane, wherein A, B, C, D, E, and F are aspheric deformation coefficients, wherein the curvature c is the inverse of the vertex radius of curvature, and wherein k is a conic constant; and

wherein k = 0, A ≠ 0, and B ≠ 0.

FIG. 1A

FIG. 1B

FIG. 2

FIG. 3

FIG. 4

FIG. 5

EP 4 556 988 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62619209
- US 62659778